# EUROPÄISCHE PATENTSCHRIFT

(11) **EP 0 327 162 B1**
(45) Veröffentlichungstag und Bekanntmachung des Hinweises auf die Patenterteilung: **13.07.1994**
(21) Anmeldenummer: 89200161.1
(22) Anmeldetag: 25.01.1989
(51) Int. Cl.: G01D 13/22, C08K 3/22, C08K 5/00, G01D 11/00, C08L 69/00

(54) **Anzeigevorrichtung**
Indicating device
Dispositif de signalisation

(30) Priorität: 01.02.1988 DE 3802868
(43) Veröffentlichungstag der Anmeldung: 09.08.1989
(73) Patentinhaber: Philips Patentverwaltung GmbH, 22335 Hamburg (DE); Philips Electronics N.V., 5621 BA Eindhoven (NL)
(72) Erfinder: Müller-Stute, Friedrich, D-2350 Neumünster (DE); Weil, Günter, D-6334 Asslar (DE)
(74) Vertreter: Hartmann, Heinrich, Dipl.-Ing.

(56) Entgegenhaltungen:
- EP-A- 0 033 079
- EP-A- 0 227 980
- DE-A- 3 001 857
- DE-A- 3 310 876
- DE-B- 2 451 782

## Beschreibung

Die Erfindung betrifft eine Anzeigevorrichtung mit einem Lichtleitkörper, welcher aus Polycarbonat besteht und mindestens einen fluoreszierenden organischen Farbstoff enthält sowie lichtsammelnde Flächen und eine Anzeigefläche aufweist, zu welcher Fluoreszenzlicht geleitet wird.

Derartige Anzeigevorrichtungen werden für technische Geräte verwendet, z.B. für Hörrundfunkempfänger (DE-C 905 448, DE-C 944 739. DE-B-2 327 824, Kontroll- oder Bedienungselemente von Fahrzeugen (DE-B-2 144 588, DE-A-2 937 041, DE-A-3 704 574), Uhren (DE-A-3 313 463) und elektrische Hausgeräte, wie Elektroherde, Waschmaschinen und Geschirrspüler (DE-C-3 603 324), wobei der Lichtleitkörper meistens aus einem Kunststoff besteht. Der Lichtleitkörper ist gegebenenfalls farbig (DE-C-944 739) oder er besteht aus einem lichtsammelnden und lichtleitenden Material, vorzugsweise mit einem fluoreszenzfähigen Farbstoff (DE-C-3 603 324); auch wird auf die optischen Anzeigeelement mit Polycarbonaten nach DE-A-3 310 876 und auf die Lichtkonzentration mittels Polycarbonaten nach EP-A-0 227 980 hingewiesen.

Fluoreszenzfähige Farbstoffe mit lichtsammelnden und lichtwandelnden Eigenschaften sind u.a. aus DE-A-2 851 513, 3 001 857, 3 016 765 und 3 235 526 und EP-B-0 081 766 (Perylenderivate), EP-B-0 025 136 und 0 032 670 (Cumarinderivate) und EP-B-0 032 373, 0 046 861 und 0 β73 007 (weitere organische Verbindungen) bekannt. In DE-A-2 851 513 und in EP-B-0 081 766 wird auf DE-B-2 451 781 und/oder 2 451 782 verwiesen, wonach die bekannten Perylenderivate sich zum Massefärben von Polystyrol, Polyacrylat oder Polycarbonat eignen, wobei z.B. 0,1 Teile des Farbstoffs mit 100 Teilen gemahlenem Polystyrol-Blockpolymerisat und 1 Teil Titandioxid gemischt werden. Anschließend wird das Gemisch einer weiteren Behandlung, z.B. in einem Mischwalzwerk oder in einem Schmelzofen, unterzogen.

Der Erfindung liegt die Aufgabe zugrunde, eine Anzeigevorrichtung mit gleichmäßiger Helligkeitsverteilung zu schaffen.

Diese Aufgabe wird erfindungsgemäß dadurch gelöst, daß der Lichtleitkörper zusätzlich TiO₂ in einer Menge von 0,0025 bis 0,03 Gew.% des Polycarbonats enthält.

Der Zusatz an Titandioxid beträgt vorzugsweise 0,0025 bis 0,03 Gew.% des Polycarbonats.

Der Zusatz an Farbstoff beträgt vorzugsweise 0,0025 bis 0,03 Gew.% des Polycarbonats.

Die Erfindung wird an Hand einer Zeichnung und eines Ausführungsbeispiels näher erläutert.

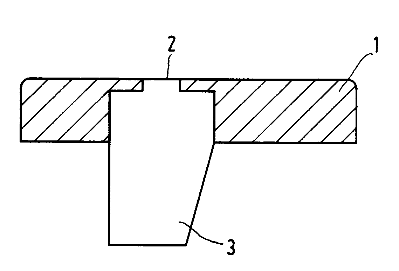

In der Zeichnung zeigt die einzige Figur eine Anzeigevorrichtung im Schnitt. In der Figur ist ein Grundkörper 1 dargestellt, durch den ein Symbol 2 angezeigt werden soll. In eine Aussparung des Grundkörpers ist ein Lichtleitkörper 3 eingesetzt, der die zuvor angegebene Zusammensetzung hat.

### Beispiel

100 g Polycarbonat (Typ glasklar) wurden mit 0,01 Gew.% TiO₂ und 0,01 Gew.% des Farbstoffs Lumogen F Orange 240, eines Farbstoffs vom Perylen-Typ (Hersteller: BASF), vermischt und zu einem Lichtleitkörper verarbeitet.

## Patentansprüche

1. Anzeigevorrichtung mit einem Lichtleitkörper, welcher aus Polycarbonat besteht und mindestens einen fluoreszierenden organischen Farbstoff enthält sowie lichtsammelnde Flächen und eine Anzeigefläche aufweist, zu welcher Fluoreszenzlicht geleitet wird,
dadurch gekennzeichnet, daß der Lichtleitkörper zusätzlich TiO₂ in einer Menge von 0,0025 bis 0,03 Gew.% des Polycarbonats enthält.

2. Anzeigevorrichtung nach Anspruch 1,
dadurch gekennzeichnet, daß der Zusatz an Farbstoff 0,0025 bis 0,03 Gew.% des Polycarbonats beträgt.

## Claims

1. A display device having an optical waveguide which is made of polycarbonate and which comprises at least a fluorescent organic dye as well as light-collecting surfaces and a display surface to which fluorescent light is guided, characterized in that the optical waveguide additionally comprises a quantity of TiO₂ which ranges from 0.0025 to 0.03% by weight of the quantity by weight of polycarbonate.

2. A display device as claimed in Claim 1, characterized in that the quantity of dye lies in the range 0.0025 - 0.03% by weight of the polycarbonate.

## Revendications

1. Dispositif d'affichage comportant un guide de lumière qui est constitué de polycarbonate et qui contient au moins une matière colorante organique fluorescente, ainsi que des surfaces captant la lumière et une surface d'affichage à laquelle est guidée la lumière fluorescente, caractérisé en ce que le guide de lumière comporte additionnellement du TiO₂ dans une quantité comprise entre 0,0025 et 0,03% en poids du polycarbonate.

2. Dispositif d'affichage selon la revendication 1, caractérisé en ce que l'addition de matière colorante est comprise entre 0,0025 et 0,03% en poids du polycarbonate.
